# EUROPEAN PATENT SPECIFICATION

(11) **EP 4 109 603 B1**
(45) Date of publication and mention of the grant of the patent: **11.06.2025**
(21) Application number: 21930590.1
(22) Date of filing: 17.11.2021
(51) Int. Cl.: H01M 4/66

(54) **CURRENT COLLECTOR INCLUDING POLYMER FILM AND METHOD OF MANUFACTURING THE SAME**
STROMKOLLEKTOR MIT POLYMERFILM UND VERFAHREN ZUR HERSTELLUNG DAVON
COLLECTEUR DE COURANT COMPRENANT UN FILM POLYMÈRE ET SON PROCÉDÉ DE FABRICATION

(30) Priority: 07.05.2021 KR 20210059193
(43) Date of publication of application: 28.12.2022
(73) Proprietor: LG Energy Solution, Ltd., Seoul 07335 (KR)
(72) Inventor: SHON, Jeong Woo, Daejeon 34122 (KR); JANG, Song Ho, Daejeon 34122 (KR); KIM, Woo Ha, Daejeon 34122 (KR); LEE, Nam Jeong, Daejeon 34122 (KR); YOON, Sung Soo, Daejeon 34122 (KR); LEE, Joong Hoon, Daejeon 34122 (KR)
(74) Representative: Plasseraud IP
(86) International application number: PCT/KR2021/016902
(87) International publication number: WO 2022/234908

(56) References cited:
- JP-A- 2010 092 607
- JP-B2- 5 316 794
- KR-A- 20130 076 955
- KR-A- 20160 025 020
- KR-A- 20210 041 627

## Description

### [Technical Field]

This application claims the benefit of priority based on Korean Patent Application No. 10-2021-0059193, filed on May 7, 2021.

The present invention relates to a current collector and a method of manufacturing the same, and more particularly, to a current collector including a polymer film and a method of manufacturing the same.

### [Background Art]

Recently, secondary batteries capable of charging and discharging have been widely used as energy sources of wireless mobile devices. In addition, the secondary battery has attracted attention as an energy source of an electric vehicle, a hybrid electric vehicle, etc., which are proposed as a solution for air pollution of existing gasoline vehicles and diesel vehicles using fossil fuel. Therefore, the types of applications using the secondary battery are currently much diversified due to the advantages of the secondary battery, and it is expected that the secondary battery will be applied to many fields and products in the future.

Such secondary batteries may be classified into lithium ion batteries, lithium ion polymer batteries, lithium polymer batteries, etc., depending on the composition of the electrode and the electrolyte, and among them, the amount of use of lithium-ion polymer batteries that are less likely to leak electrolyte and are easy to manufacture is on the increase. In general, secondary batteries are classified depending on the shape of a battery case into cylindrical batteries and prismatic batteries in which an electrode assembly is embedded in a cylindrical or rectangular metal can, , and pouch-type batteries in which the electrode assembly is embedded in a pouch-type case of an aluminum laminate sheet. The electrode assembly built into the battery case is composed of a positive electrode, a negative electrode, and a separator interposed between the positive electrode and the negative electrode, and is a power generating element capable of charging and discharging. The electrode assembly is classified into a jelly-roll type wound with a separator interposed between the positive electrode and the negative electrode which are long sheet-shaped and are coated with active materials, and a stack type in which a plurality of positive electrodes and negative electrodes of a predetermined size are sequentially stacked while a separator is interposed therebetween.

These electrodes may be manufactured by forming an electrode mixture layer by coating an electrode slurry containing an electrode active material on a current collector and drying the electrode slurry. At this time, a general current collector may be made of metal having excellent electrical conductivity such as copper or aluminum, a current collector, which is obtained by complexing a polymer film with metal, is being developed for weight-lightening of the current collector.

However, in the case of a current collector, which is obtained by complexing such a polymer with metal, the elastic modulus of a general polymer film is in a range of 0.1 to 5 GPa, which is much lower than that of copper (117 GPa) or aluminum (69 GPa). As such, the thickness of the polymer-metal complex current collector should be set to be 10 times or more greater than that of a general current collector in order to impart physical properties similar to those of a metal current collector. This causes a problem that the volume and mass of the electrode increases.

### [Disclosure]

### [Technical Problem]

The present invention is believed to solve at least some of the above problems. For example, an aspect of the present invention provides a polymer-metal complex current collector having improved mechanical properties, and a method of manufacturing the same.

### [Technical Solution]

A current collector according to the present invention is a current collector including a complex polymer film layer. The complex polymer film layer includes: a polymer matrix; and fiber-shaped or plate-shaped metal materials which are dispersed in the polymer matrix, and the metal materials are oriented in one direction.

In a specific example, the metal material may be at least one selected from the group consisting of aluminum, copper, indium, titanium, tin, nickel, iron, tungsten, chrome, cobalt, gold and silver, and the polymer film may be made of at least one selected from the group consisting of a polyolefin resin, a polyamide resin, a polyester resin, and a polyalkyl(meth)acrylate resin.

In a specific example, a diameter of a cross-section of the fiber-shaped metal material may be in a range of 10 to 500 nm, and a length of the cross-section of the fiber-shaped metal material may be in a range of 0.5 to 200 *µ*m.

In a specific example, a thickness of the plate-shaped metal material may be in a range of 10 to 500 nm, and a width and a length of the plate-shaped metal material may be in a range of 0.5 to 200 *µ*m, respectively.

In one example, the metal material may contain two or more different kinds of metal.

In a specific example, the angle between the metal material and the longitudinal direction axis of the polymer film layer is equal to or less than 20°, and the angle between the metal material and the thickness direction axis of the polymer film layer is in the range of 70 to 90°.

In a specific example, a thickness of the polymer film layer may be in a range of 10 to 200 *µ*m.

In another example, the current collector may further include a metal layer which is formed on at least one surface of the polymer film and has a thickness of 1 *µ*m or less.

Further, the present invention provides a method of manufacturing the above-described current collector.

The method of manufacturing a current collector according to the present invention includes: forming a deposition layer by depositing a metal on at least one surface of a base film made of a polymer material; manufacturing a polymer-metal complex material by pulverizing and mixing the base film having the deposition layer formed thereon and then first-extruding the base film; and forming a polymer film layer in which fiber-shaped or plate-shaped metal materials are oriented in one direction in a polymer matrix, by extruding the polymer-metal complex material.

In a specific example, the metal may be at least one selected from the group consisting of aluminum, copper, indium, titanium, tin, nickel, iron, tungsten, chrome, cobalt, gold and silver, and the base film may be made of at least one selected from the group consisting of a polyolefin resin, a polyamide resin, a polyester resin, and a polyalkyl(meth)acrylate resin.

In a specific example, a thickness of the deposition layer may be in a range of 50 to 400 nm, and a thickness of the base film may be in a range of 20 to 400 *µ*m.

At this time, a volume ratio of the deposition layer to the base film may be in a range of 0.5: 99.5 to 10: 90.

In one example, the deposition layer may have a structure where two or more different metal layers are laminated.

In a specific example, the base film having the deposition layer formed thereon may be extruded by a twin-screw extruder.

Further, extrusion of a polymer-metal complex material may be performed by a single-screw extruder.

In another example, the method of manufacturing a current collector according to the present invention may further include forming a metal layer on at least one surface of the polymer film layer.

### [Advantageous Effects]

According to the present invention, it is possible to improve mechanical properties of the current collector including a polymer film layer by dispersing fiber-shaped or plate-shaped metal materials oriented in one direction in the polymer film layer.

### [Brief Description of the Drawings]

FIG. 1 is a schematic diagram showing a longitudinal cross-section of a current collector according to an embodiment of the present invention.
FIG. 2 is a schematic diagram showing a width direction cross-section of a current collector according to an embodiment of the present invention.
FIG. 3 is a schematic diagram showing a longitudinal cross-section of a current collector according to another embodiment of the present invention.
FIG. 4 is a flowchart illustrating the order of the method of manufacturing a current collector according to the present invention.
FIG. 5 is a schematic diagram illustrating the order of the method of manufacturing a current collector and a change according thereto according to the present invention.
FIGS. 6 to 8 are schematic diagrams illustrating each process of a method of manufacturing a current collector according to the present invention.
FIGS. 9 to 11 are SEM photographs showing the cross-section of a polymer film layer and photographs showing the element distribution according to the examples and comparative examples.

### [Detailed Description of the Preferred Embodiments]

Hereinafter, the present invention will be described in detail with reference to the drawings. The terms and words used in the present specification and claims should not be construed as limited to ordinary or dictionary terms and the inventor may properly define the concept of the terms in order to best describe its invention. The terms and words should be construed as meaning and concept consistent with the technical idea of the present invention.

In this application, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof. Also, when a portion such as a layer, a film, an area, a plate, etc. is referred to as being "on" another portion, this includes not only the case where the portion is "directly on" the another portion but also the case where further another portion is interposed therebetween. On the other hand, when a portion such as a layer, a film, an area, a plate, etc. is referred to as being "under" another portion, this includes not only the case where the portion is "directly under" the another portion but also the case where further another portion is interposed therebetween. In addition, to be disposed "on" in the present application may include the case disposed at the bottom as well as the top.

Further, in the present invention, a longitudinal direction of a polymer film or a current collector means a direction in which a polymer is extruded at the time of forming a polymer film layer, or a direction (MD direction, x-axis direction) in which a film is moved at the time of manufacturing and processing a current collector. The width direction means a direction perpendicular to (y-axis direction) the longitudinal direction on the surface formed by a film layer.

Hereinafter, the present invention will be described in detail with reference to the drawings.

A current collector according to the present invention is a current collector including a complex polymer film layer. The complex polymer film layer includes: a polymer matrix; and fiber-shaped or plate-shaped metal materials which are dispersed in the polymer matrix, and the metal materials are oriented in one direction.

As described above, in the case of a current collector, which is obtained by complexing a polymer with metal, the physical properties of a general polymer film are much lower than those of a metal current collector. As such, the thickness of the polymer-metal complex current collector should be set to be 10 times or more greater than that of a general current collector in order to impart physical properties similar to those of a metal current collector. This causes a problem that the volume and mass of the electrode increases.

According to the present invention, it is possible to improve mechanical properties of the current collector including a polymer film layer by dispersing fiber-shaped or plate-shaped metal materials in the polymer film layer.

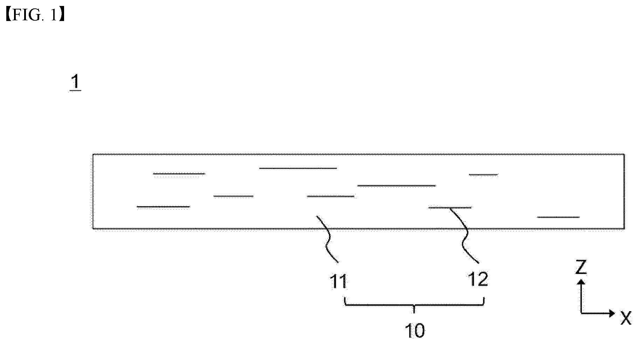

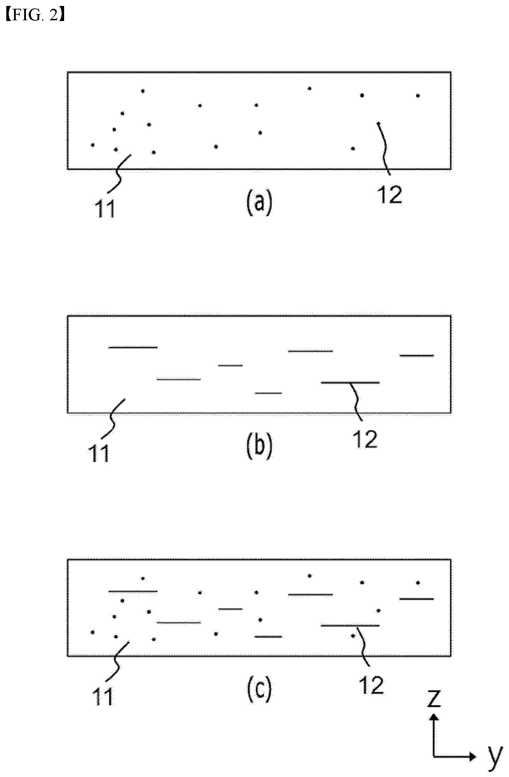

FIG. 1 is a schematic diagram showing a longitudinal cross-section of a current collector according to an embodiment of the present invention, and FIG. 2 is a schematic diagram showing a width direction cross-section of a current collector according to an embodiment of the present invention.

Referring to FIGS. 1 and 2, a current collector 1 according to the present invention includes a polymer film layer 10. The polymer film layer 10 is the main body of a current collector and weight-lightens the current collector and gives flexibility to the current collector, compared to the case of using metal.

As illustrated in FIGS. 1 and 2, the polymer film layer 10 includes: a polymer matrix 11; and metal materials 12 dispersed in the polymer matrix 11.

A material, which functions as a matrix in which metal materials to be described later are dispersed, provides flexibility to the current collector, and has a rigidity sufficient to be used as the current collector, may be used as the polymer material which is used for the polymer matrix 11. For example, the polymer film may be made of at least one selected from the group consisting of a polyolefin resin, a polyamide resin, a polyester resin, and a polyalkyl(meth)acrylate resin.

At this time, the polyolefin resin may be high-density, intermediate-density, low-density, or linear low-density polyethylene, crystalline polypropylene, non-crystalline polypropylene, or polybutylene.

The polyamide resin may be nylon 6, nylon 6,6, nylon 610, or nylon 12.

The polyester resin may be polyethylene terephthalate (PET), polybutylene terephthalate (PBT), or polyethylene naphthalate.

The polyalkyl(meth)acrylate resin may be polymethyl methacrylate, polymethyl acrylate, polyethyl acrylate, or polybutyl acrylate.

The metal material 12 has a minimum nanometer level size and is uniformly dispersed in the polymer matrix 11.

More specifically, the metal material 12 may be fiber-shaped or plate-shaped. Herein, the fiber shape indicates that the metal material 12 in the polymer matrix 11 has a thin fiber shape as shown in FIG. 2(a). On the other hand the plate shape of the metal material 12 indicates that the metal material 12 has a flat shape like a strip or a sheet as shown in FIG. 2(b).

Namely, the metal material 12 has a shape which is long in one direction. The metal material 12 improves mechanical properties of the polymer film layer 10 by being oriented in one direction in the polymer matrix 11. Specifically, the metal material 12 may be oriented in a longitudinal direction (x-axis direction) of the polymer film layer 10 as illustrated in FIGS. 1 and 2.

The metal material may be at least one selected from the group consisting of aluminum, copper, indium, titanium, tin, nickel, iron, tungsten, chrome, cobalt, gold and silver, but there is no limitation to the type as long as it can be easily processed together with a film and can improve mechanical properties of the polymer film layer. More specifically, a metal having a melting point, which is higher than a temperature which is set at the time of extruding materials constituting a polymer matrix to be described later, may be used as the metal material, such as aluminum, copper, titanium, nickel, tungsten, and iron. This is because, in the case that the melting point is lower than the temperature which is set at the time of melting and extruding a polymer material, metal may not be able to form a plate shape or a fiber shape and may form a spherical shape. For example, the melting point of the metal material may be equal to or greater than 200°C, specifically 600°C, and more specifically 800°C.

If the metal material 12 is fiber-shaped, the diameter of the cross-section of the metal material 12 may be in a range of 10 to 500 nm, in a range of 100 to 400 nm, or in a range of 150 to 350 nm, and the length of the metal material 12 may be in a range of 0.5 to 200 *µ*m, in a range of 0.5 to 150 *µ*m, or in a range of 0.5 to 100 *µ*m.

Further, if the metal material 12 is plate-shaped, the thickness of the metal material 12 may be in a range of 10 to 500 nm, in a range of 100 to 400 nm, or in a range of 150 to 350 nm, and the width and the length of the metal material 12 may be in a range of 0.5 to 200 *µ*m, in a range of 0.5 to 150 *µ*m, or in a range of 0.5 to 100 *µ*m.

When the size (diameter, thickness or length) of the metal material is excessively small, the effects of increasing physical properties are not significant, and when the size the metal materials is excessively large, the thickness of the deposition layer formed on the base film should become thick as will be described later. In this case, a crack may be generated on the deposition layer, and the costs may increase.

Likewise, the metal material 12 may be easily bonded on the polymer matrix 11 in the polymer matrix 11 by dispersing fiber-shaped or plate-shaped metal materials 12 having a nanometer level size in the polymer matrix 11, and it is possible to prevent the metal material 12 from being discharged to the outside of the polymer matrix 11.

Further, the metal material 12 may improve longitudinal direction mechanical properties of the polymer film layer 10 by being oriented in the longitudinal direction (x-axis direction) of the polymer film layer 10 as described above. Specifically, the angle between the metal material 12 and the longitudinal direction axis (x-axis) of the polymer film layer 10 may be 20° or less, 15° or less, or 10° or less, and the angle between the metal material 12 and the thickness direction axis (z-axis) may be in the range of 70 to 90°, or 80 to 90°. Further, 80% or more, 90% or more, or 95% or more of the entire metal material may have the above orientation angle. When the orientation degree of the metal material 12 is in the above range, the mechanical properties of the polymer film layer 10 may be effectively improved.

In one example, the metal material 12 may contain two or more different kinds of metal. This includes both a case that different metal materials each is made of a different metal and a case that one metal material contains two or more kinds of metals. As such, it is possible to set the strength, flexibility and processability of the polymer film layer at a desired level. At this time, the type and content ratio (e.g., volume ratio) of the metal material may be selected in consideration of strength, flexibility and processability of the polymer film layer intended to be achieved. For example, in order to enhance the strength of the polymer film layer, a metal material having a relatively large strength may be used, and in order to enhance flexibility and processability, a metal material having a relatively large ductility, or a metal material having a relatively low melting point may be used.

Further, a thickness of the polymer film layer may be in a range of 10 to 200 *µ*m, and specifically in a range of 50 to 150 *µ*m. Namely, the current collector 1 according to the present invention has a thickness similar to that of a general metal current collector, and may show mechanical properties similar to those of the metal current collector. When the thickness of the polymer film layer 10 is less than 10 *µ*m, it is difficult to show mechanical properties because the thickness of the current collector is excessively small, and when the thickness of the polymer film layer 10 exceeds 200 *µ*m, the volume and the weight of the electrode and the battery cell increase because the thickness of the current collector excessively increases.

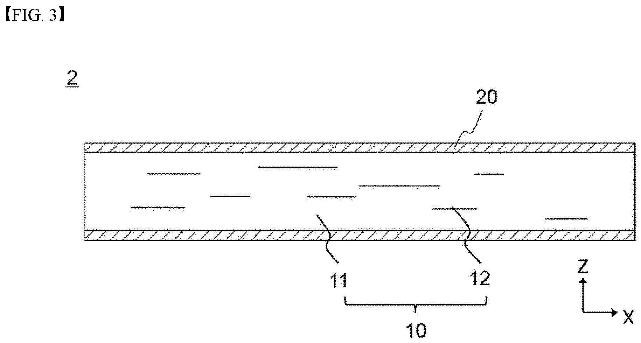

FIG. 3 is a schematic diagram showing a longitudinal cross-section of a current collector according to another embodiment of the present invention.

Referring to FIG. 3, the current collector 2 according to the present invention may further include a metal layer 20 formed on at least one surface of the polymer film layer 10. The metal layer 20 additionally supplements mechanical rigidity of the polymer film layer 10 and increases electrical conductivity of the current collector 2.

For example, the metal layer 20 may be formed by deposition and has a thin thickness of 1 *µ*m or less or 0.5 *µ*m or less. As such, it is possible to minimize the increase in the volume and weight of the electrode while supplementing the mechanical rigidity of the current collector 2 and improving the electrical conductivity of the current collector 2. Further, the metal layer may have a thickness of 50 nm or more, 100 nm or more, or 200 nm or more.

Further, the present invention provides an electrode including a current collector as described above.

The electrode includes an electrode mixture layer formed on at least one surface of the above-described current collector. The electrode mixture layer is formed by coating an electrode slurry including an electrode active material, a conductive material and a binder on a current collector. The electrode active material may be a positive electrode active material or a negative electrode active material.

In the present invention, the positive electrode active material is a material capable of causing an electrochemical reaction and a lithium transition metal oxide, and contains two or more transition metals. Examples thereof include: layered compounds such as lithium cobalt oxide (LiCoO₂) and lithium nickel oxide (LiNiO₂) substituted with one or more transition metals; lithium manganese oxide substituted with one or more transition metals; lithium nickel oxide represented by the formula LiNi_{1-y}M_{y}O₂ (wherein M = Co, Mn, Al, Cu, Fe, Mg, B, Cr, Zn or Ga and contains at least one of the above elements, 0.01 ≦ y ≦ 0.7); lithium nickel cobalt manganese composite oxide represented by the formula Li_{1+z}Ni_{b}Mn_{c}Co_{1-(b+c+d)}M_{d}O₍₂₋ₑ₎Aₑ such as Li_{1+z}Ni_{1/3}Co_{1/3}Mn_{1/3}O₂, Li_{1+z}Ni_{0.4}Mn_{0.4}Co_{0.2}O₂ etc. (wherein-0.5≤z≤0.5, 0.1≤b≤0.8, 0.1≤c≤0.8, 0≤d≤0.2, 0≤e≤0.2, b+c+d<1, M = Al, Mg, Cr, Ti, Si or Y, and A = F, P or Cl); olivine-based lithium metal phosphate represented by the formula Li₁₊ₓM_{1-y}M'_{y}PO_{4-z}X_{z} (wherein M = transition metal, preferably Fe, Mn, Co or Ni, M'= Al, Mg or Ti, X = F, S or N, and -0.5≤x≤0.5, 0≤y≤0.5, 0≤z≤0.1).

Examples of the negative electrode active material include carbon such as non-graphitized carbon and graphite carbon; metal complex oxide such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, groups 1, 2, and 3 of the periodic table, halogen; 0<x≤1; 1≤y≤3; 1≤z≤8); lithium metal; lithium alloy; silicon alloy; tin alloy; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; and Li-Co-Ni-based materials.

The conductive material is usually added in an amount of 1 to 30% by weight based on the total weight of the mixture including the positive electrode active material. Such a conductive material is not particularly limited as long as it has electrical conductivity without causing a chemical change in the battery, and examples thereof include graphite such as natural graphite and artificial graphite; carbon black such as carbon black, acetylene black, Ketjen black, channel black, furnace black, lamp black, and summer black; conductive fibers such as carbon fiber and metal fiber; metal powders such as carbon fluoride, aluminum and nickel powder; conductive whiskey such as zinc oxide and potassium titanate; conductive metal oxides such as titanium oxide; and conductive materials such as polyphenylene derivatives and the like.

The binder is added in an amount of 1 to 30% by weight, on the basis of the total weight of the mixture containing the positive electrode active material, as a component that assists in bonding between the active material and the conductive material and bonding to the current collector. Examples of such binders include polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene terpolymer (EPDM), sulfonated EPDM, styrene butylene rubber, fluorine rubber, various copolymers and the like.

The present invention also provides a method for manufacturing a current collector as described above.

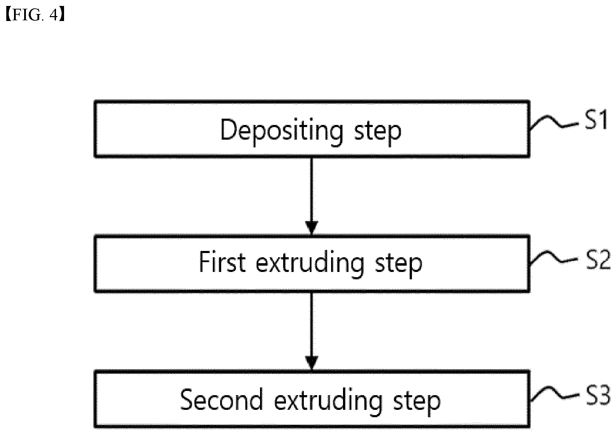

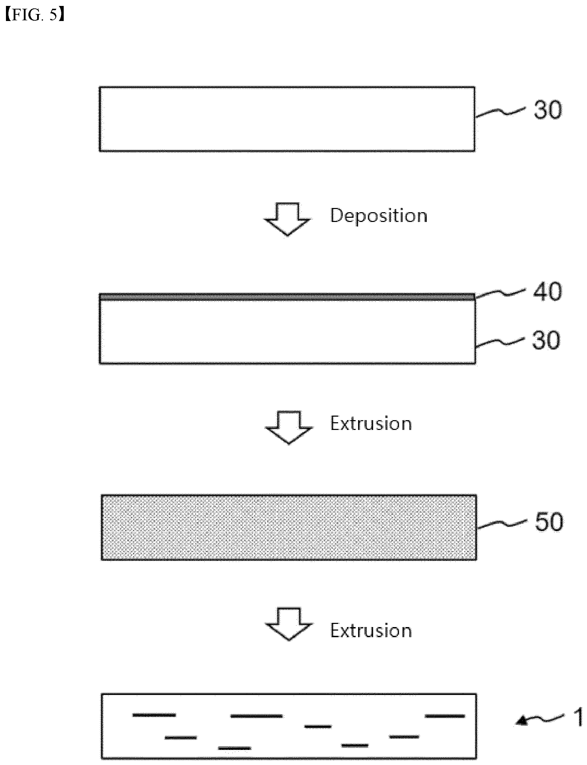

FIG. 4 is a flowchart illustrating the order of the method of manufacturing a current collector according to the present invention, and FIG. 5 is a schematic diagram illustrating the order of the method of manufacturing a current collector and a change according thereto according to the present invention.

Referring to FIGS. 4 and 5, a method of manufacturing a current collector according to the present invention includes: forming a deposition layer by depositing a metal on at least one surface of a base film made of a polymer material (S1); manufacturing a polymer-metal complex material by pulverizing and mixing the base film having the deposition layer formed thereon and then first-extruding the base film (S2); and forming a polymer film layer in which fiber-shaped or plate-shaped metal materials are oriented in one direction in a polymer matrix, by extruding the polymer-metal complex material (S3).

According to the method of manufacturing a current collector of the present invention, it is possible to manufacture a polymer-metal complex current collector having improved mechanical properties by making a polymer-metal complex material by extruding a base film made of a polymer material having a metal deposition layer formed thereon, and extruding again the polymer-metal complex material.

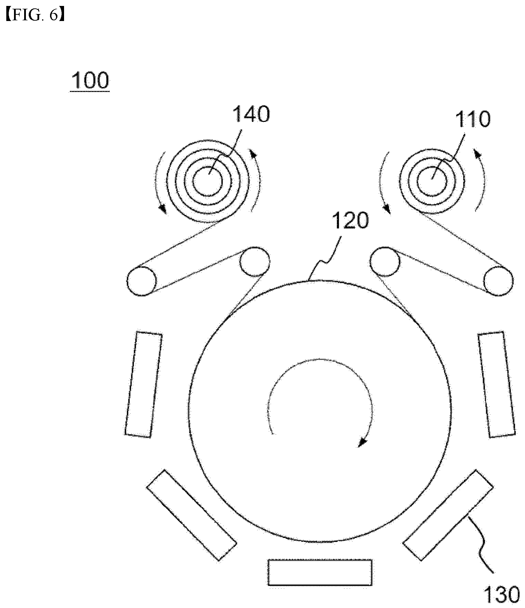

FIGS. 6 to 8 are schematic diagrams illustrating each process of a method of manufacturing a current collector according to the present invention.

Referring to FIGS. 6 to 8 together with FIG. 5, first, a base film 30 made of a polymer material is prepared. The base film 30 is a material constituting a polymer matrix of a current collector according to the present invention and may be made of at least one selected from the group consisting of a polyolefin resin, a polyamide resin, a polyester resin, and a polyalkyl(meth)acrylate resin. The details about the resin are the same as described above.

The base film 30 is prepared, metal is deposited on the base film 30 to thereby form a deposition layer 40 as shown in FIG. 5. The deposition layer may be formed on at least one surface of the base film. The deposition layer 40 may be made of at least one selected from the group consisting of aluminum, copper, indium, titanium, tin, nickel, iron, tungsten, chrome, cobalt, gold and silver as the metal material of the current collector according to the present invention. More specifically, a metal having a melting point, which is higher than a temperature which is set at the time of extruding a base film (base film having a deposition layer formed thereon) to be described later, may be used as the metal material, such as aluminum, copper, titanium, nickel, tungsten, and iron. This is because, in the case that the melting point is lower than the set temperature, metal may not be able to form a plate shape or a fiber shape and may form a spherical shape as the metal is melted and moved. For example, the melting point of the metal material may be equal to or greater than 200°C, specifically 600°C, and more specifically 800°C.

In the present invention, it is possible to coat metal on the base film to have a nanometer level thickness by depositing the metal on the base film 30. Likewise, metal particles are better boned on the base film 30 by forming a deposition layer 40 on the base film 30, compared to the case of simply dispersing metal particles at the inside of the film. The deposition layer may be formed on the whole or part of the base film.

At this time, the thickness of the deposition layer 40 may be in a range of 50 to 400 nm, 100 to 350 nm, or 150 to 300 nm, and the thickness of the base film 30 may be in a range of 20 to 400 *µ*m, 50 to 350 *µ*m, or 100 to 300 *µ*m. When the thickness of the deposition layer is less than the above range or the thickness of the base film exceeds the above range, it is difficult to satisfy physical properties of the current collector intended to be achieved because the volume of the deposition layer is excessively small, compared to the base film. On the contrary, if the thickness of the deposition layer exceeds the above range or the thickness of the base film is less than the above range, a crack may be generated on the deposition layer, the manufacturing costs increase, and it is difficult to achieve weight-lightening of the current collector.

Further, the volume ratio of the deposition layer 40 to the base film 30 may be in a range of 0.5: 99.5 to 10: 90, 0.5: 99.5 to 5: 95, 0.5: 99.5 to 3: 97, or 0.5: 99.5 to 1.5: 98.5. When the above numerical range is satisfied, it is possible to include a sufficient amount of metal materials in the polymer film layer to be described later while weight-lightening the current collector. The volume ratio may be calculated using the thickness and area of the base film and the deposition layer. When the volume of the deposition layer is excessively smaller than that of the base film, it is difficult to improve mechanical properties, and when the volume of the deposition layer is excessively large, the manufacturing costs increase, and a crack may be generated on the deposition layer.

Further, the deposition layer 40 may have a structure where two or more different metal layers are laminated. Likewise, it is possible to allow the metal material in the polymer film layer to include two or more different kinds of metal at the time of manufacturing a current collector by forming the deposition layer 40 to have a structure of 2 or more layers composed of different metals. As such, it is possible to set the strength, flexibility and processability of the polymer film layer at a desired level. At this time, the thickness of each layer constituting the deposition layer and type of the metal may be selected in consideration of strength, flexibility and processability of the polymer film layer. For example, in order to enhance the strength of the polymer film layer, a metal material having a relatively large strength may be used, and in order to enhance flexibility and processability, a metal material having a relatively large ductility, or a metal material having a low melting point may be used.

The deposition layer 40 may be formed by an evaporation method, a sputtering method, or an aerosol deposition method. The evaporation method refers to a method of depositing target materials on an object by evaporation or sublimation using an electron beam or an electric filament in a normal pressure or high-vacuum chamber (5x10⁻⁵~1x10⁻⁷Torr). Further, the sputtering method refers to a method of depositing target materials on an object by plasma which is generated by allowing gas such as argon to flow in a vacuum chamber and applying voltage.

Specifically, when the evaporation method is used, voltage may be applied to the target positioned at the crucible and the evaporation boat including tungsten (W) or molybdenum (Mo) at a high-vacuum state (5x10⁻⁵~1x10⁻⁷Torr) or a normal pressure, or power of the electron beam was increased, and it was then performed under the evaporation speed condition of 0.1 nm/sec. to 10 nm/sec.

Alternatively, when the sputtering method is used, it can be performed under eutectic pressure of 1 to 100 mTorr, 1 to 75 mTorr, or 1 to 50 mTorr. Further, the sputtering can be performed in a chamber including sputtering gas such as argon (Ar) or helium (He) or reactive gas such as oxygen, nitrogen, or mixed gas thereof. Other details about the deposition method are known to those of ordinary skill in the art, and thus detailed description thereof will be omitted.

Herein, the deposition layer may be formed by a roll-to-roll process and may be performed by a deposition unit 100 having a structure as shown in FIG. 6. For example, as shown in FIG. 6, as a base film, which is unwound from an unwinding roll 110, is moved along the surface of a driving roll 120, metal elements, which are evaporated from a metal supply source 130 positioned at a position spaced apart by a predetermined distance may be deposited on the base film 30. The base film 30 having the deposition layer 40 formed thereon may be wound on the rewinding roll 140.

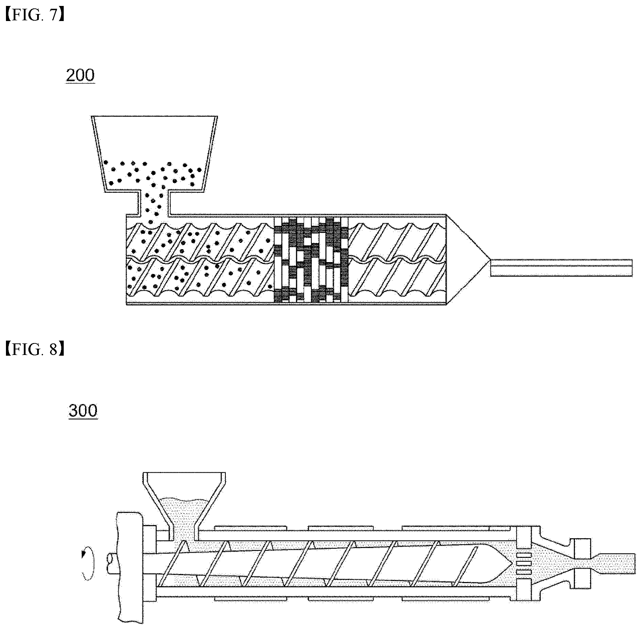

When the deposition is completed, a polymer-metal complex material 50 is manufactured by extruding the base film having the deposition layer formed thereon. Specifically, as shown in FIG. 7, the extrusion is performed after pulverizing and mixing the base film 30. At this time, the extrusion is performed after pulverizing, mixing and melting the base film 30 having the deposition layer formed thereon. The melting may be performed at a temperature of 180°C or higher, and may specifically be performed even at a temperature of 200°C or higher. Alternatively, a hot press melting machine may be used.

Thereafter, a polymer-metal complex material is formed by extruding molten materials obtained through the melting process. The process may be extruded by the twin-screw extruder 200. In the case of twin-screw extruder, metal materials may be easily dispersed in the polymer matrix. In this process, the metal inside may be formed in a plate or fiber shape.

When the polymer-metal complex material 50 is manufactured, the polymer-metal complex material 50 is extruded again as shown in FIG. 8. At this time, after extruding the polymer-metal complex material 50, the extruded material may be made in the form of a film, and as the polymer-metal complex material 50 is extruded in the form of a film, the plate-shaped or fiber-shaped metal material is oriented again in a longitudinal direction (extruding direction) of a film. Herein, being oriented in a longitudinal direction indicates that plate-shaped or fiber-shaped metal materials are arranged to have an angle in a predetermined range with the longitudinal direction axis and the thickness direction axis as described above.

The extrusion of the polymer-metal complex material 50 may be performed after pulverizing, mixing and melting the polymer-metal complex material 50, and the extrusion may be performed by a single-screw extruder 300. The polymer-metal complex material may be uniformly discharged, and the metal material inside the polymer-metal complex material may be oriented in one direction along the extruding direction by performing extrusion using a single-screw extruder.

Thereafter, the extruded polymer film may go through the cooling process, which may be performed by using a method of leaving the polymer film in a room temperature or using a separate cooler.

In another example, the method of manufacturing a current collector according to the present invention may further include forming a metal layer on at least one surface of the polymer film layer manufactured by the above-described method.

For example, the metal layer may be formed by deposition and has a thin thickness of 1 *µ*m or less or 0.5 *µ*m or less. As such, it is possible to minimize the increase in the volume and weight of the electrode while supplementing the mechanical rigidity of the current collector and improving the electrical conductivity of the current collector.

Hereinafter, the present invention will be described in detail with reference to examples. However, the embodiments according to the present invention may be modified into various other forms, and the scope of the present invention should not be construed as being limited to the examples described below. The examples of the present invention are provided to more fully describe the present invention to those skilled in the art.

### Example 1-1

A deposition layer was formed by depositing aluminum on a polymethyl methacrylate (PMMA) resin film having a thickness of 210 *µ*m as a base film to have a thickness of 100 nm. A polymer-metal complex material was manufactured by pulverizing the base film having the deposition layer formed thereon and then mixing the pulverized base film at conditions of 180°C and 50 rpm and extruding the mixture using a twin-screw extruder. A polymer film layer having a thickness of 100 *µ*m was formed by extruding the polymer-metal complex material again using a single-screw extruder.

### Example 1-2

A polymer film layer was formed in the same manner as in the example 1-1 except that indium of 100 nm was deposited on the base film.

### Comparative Example 1

A polymer film layer was formed by extruding a PMMA resin film in the same manner as in the example 1-1 without forming a deposition layer.

### Experimental Example 1

The elastic modulus and fracture elongation rate of the polymer film layer according to the examples 1-1 and 1-2 and comparative example 1 were measured. The elastic modulus and the fracture elongation rate were measured using a universal testing machine (UTM) according to the measurement method of ASTM D 882. The results are shown in Table 1 below.

**[Table 1]**

| | Elastic modulus (GPa) | Fracture elongation rate (%) |
|---|---|---|
| Example 1-1 | 12.0 | 24 |
| Example 1-2 | 9.5 | 20 |
| Comparative Example 1 | 1.1 | 13 |

Referring to Table 1, it is seen that the mechanical properties of the film of the example, which is obtained by extruding again a polymer-metal complex material which has been formed by depositing metal on a base film and extruding the base film, are better than the mechanical properties of the comparative example 1. This is because the fiber-shaped or plate-shaped metal material inside the film has been oriented in the extruding direction.

### Example 2-1

A deposition layer was formed by depositing aluminum on a polypropylene (PP) resin film having a thickness of 210 *µ*m as a base film to have a thickness of 300 nm. At this time, the ratio, by which metal is occupied in the total volume of the base film having the deposition layer formed thereon, was 1.5%. A polymer-metal complex material was manufactured by pulverizing the base film having the deposition layer formed thereon and then mixing the pulverized base film at conditions of 180°C and 50 rpm and extruding the mixture using a twin-screw extruder. A polymer film layer having a thickness of 100 *µ*m was formed by extruding the polymer-metal complex material again using a single-screw extruder.

A current collector having a metal layer formed thereon was manufactured by depositing copper (Cu) on two surfaces of the polymer film layer to have a thickness of 150 nm using an E-beam evaporator.

### Examples 2-2 to 2-4

As shown in Table 2 below, after depositing metal on a PP base film to have a predetermined thickness, a current collector was manufactured in the same manner as in example 2-1.

### Example 2-5

As shown in Table 2, after depositing indium (In) and aluminum (Al) on a polypropylene (PP) resin film as a base film to have a thickness of 20 nm and 300 nm, respectively, a current collector was manufactured in the same manner as in example 2-1.

### Comparative example 2-1

A current collector was manufactured by extruding a PP resin film in the same manner as in the example 2-1 without forming a deposition layer.

### Comparative example 2-2

The current collector was manufactured in the same manner as in the example 2-1 except that aluminum was deposited on the base film to have a thickness of 20 nm.

### Experimental Example 2

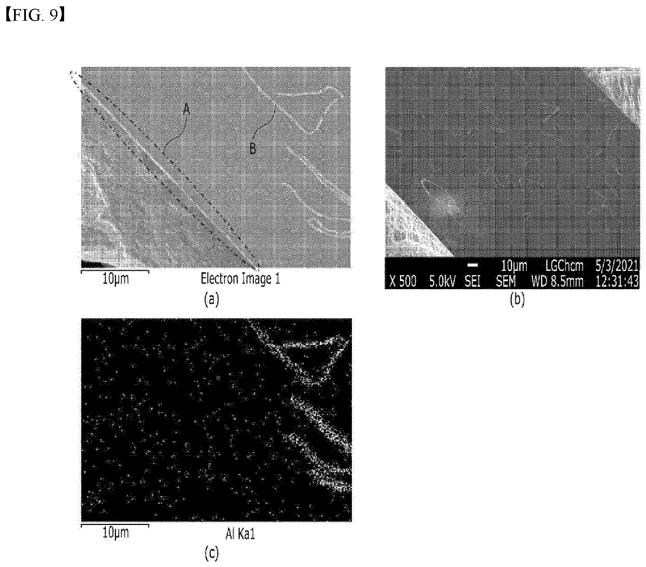

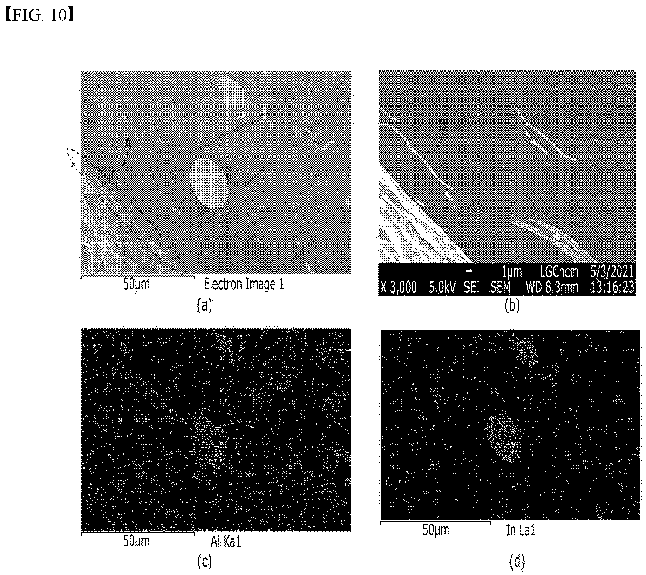

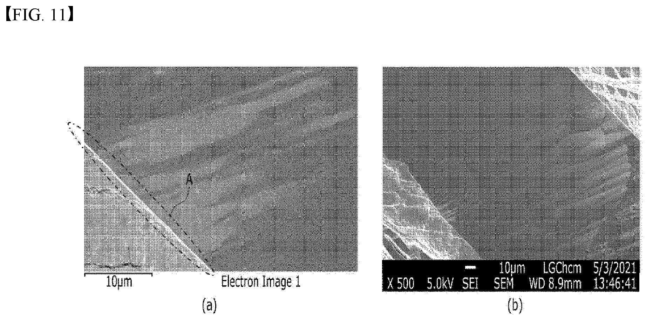

SEM photographs and energy dispersive X-ray spectroscopy (EDS) photographs of a longitudinal cross-section were obtained by inserting the polymer film layer, which had been manufactured according to examples 2-1 and 2-5 and comparative example 2-1, into FESEM (JSM-7610F of JEOL company), and the photographs are shown in FIG. 9 (example 2-1), FIG. 10 (examples 2-5) and FIG. 11 (comparative example 2-1), respectively. In FIGS. 9 to 11, (a) and (b) are SEM photographs obtained by magnifying the sample 3000 and 500 times, respectively, and FIG. 9(c) shows photographs showing the distribution of aluminum through EDS. FIG. 10(c) shows the distribution of aluminum metal and FIG. 10(d) shows the distribution of indium metal through EDS. Further, in FIGS. 9 to 11, the line formed on the region A is a Cu metal layer deposited on the polymer film layer.

### Experimental Example 3

A complex modulus was measured under conditions of a room temperature and a frequency of 1Hz while applying strain of 0.1%to the specimen using Q800 (TA company) as a dynamic mechanical analysis (DMA) equipment. The results are shown in Table 2 below.

**[Table 2]**

| | Deposited material | Deposition thickness (nm) | E*(MPa) | E*(%) | Volume ratio of metal to PP resin film (%) |
|---|---|---|---|---|---|
| Example 2-1 | Al | 300 | 2006.6 | 90.1 | 1.5 |
| Example 2-2 | Ni | 100 | 1793.9 | 70.0 | 0.5 |
| Example 2-3 | In | 300 | 1621.4 | 53.6 | 1.5 |
| Example 2-4 | In | 100 | 1563.1 | 48.1 | 0.5 |
| Example 2-5 | In | 20 | 1865.4 | 76.7 | 0.1 |
| | Al | 300 | | | 1.5 |
| Comparative example 2-1 | - | - | 1055.5 | 0.0 | - |
| Comparative example 2-2 | Al | 20 | 1070.2 | 1.3 | 0.1 |

Referring to FIGS. 9 to 11, the current collector according to the example of the present invention may include fiber-shaped or plate-shaped metal materials (B) having a thickness or cross-section diameter of an nm unit and a *µ*m unit length therein. Referring to Table 2, it is seen that the mechanical properties of the current collector of the example, which is obtained by extruding again a polymer-metal complex material which has been formed by depositing metal on a film at a predetermined volume ratio and extruding the film, are better than the mechanical properties of the comparative example 2-1. This is because the fiber-shaped or plate-shaped metal material inside the film has been oriented in the extruding direction as shown in FIGS. 9 and 10.

Further, in the case of the comparative example 2-2 in which the thickness of the deposition layer is smaller than that of the example, physical properties decreased, compared to the example, because metal materials inside the polymer film layer have not been sufficiently formed.

Herein, in the case of the examples 2-3 and 2-4 which use indium (In), the processability has been improved due to a low melting point (160°C) of indium, but physical properties of the current collector have decreased, compared to the case where aluminum or nickel having a melting point higher than that which has been set at the time of extrusion is used, which is because indium melted during extrusion may exist in a spherical form as well as a linear form while moving as shown in Figure 10. In this case, it is possible to further improve physical properties of the current collector by further forming a deposition layer made of a different metal material such as Al by forming the deposition layer as a two-layer structure.

The above description is merely illustrative of the technical idea of the present invention, and those skilled in the art to which the present invention pertains may make various modifications and variations without departing from the essential characteristics of the present invention. Therefore, the drawings disclosed in the present invention are not intended to limit the technical idea of the present invention but to describe the present invention, and the scope of the technical idea of the present invention is not limited by these drawings. The scope of protection of the present invention should be interpreted by the following claims, and all technical ideas within the scope equivalent thereto should be construed as being included in the scope of the present invention.

On the other hand, in this specification, terms indicating directions such as up, down, left, right, before, and after are used, but it is obvious that these terms are for convenience of description only and may change depending on the location of the object or the location of the observer.

### [Description of reference numerals]

1, 2: current collector
10: polymer film layer
11: polymer matrix
12: metal material
20: metal layer
30: base film
40: deposition layer
50: polymer-metal complex material
100: deposition unit
110: unwinding roll
120: driving roll
130: metal supply source
140: rewinding roll
200: twin-screw extruder
300: single-screw extruder

## Claims

1. A current collector (1,2) including a complex polymer film layer (10),
wherein the complex polymer film layer (10) includes:
a polymer matrix (11); and
fiber-shaped or plate-shaped metal materials (12) which are dispersed in the polymer matrix (11), and
wherein the metal materials (12) are oriented in one direction.

2. The current collector of claim 1, wherein the metal material (12) is at least one selected from the group consisting of aluminum, copper, indium, titanium, tin, nickel, iron, tungsten, chrome, cobalt, gold and silver, and
wherein the polymer matrix (11) is made of at least one selected from the group consisting of a polyolefin resin, a polyamide resin, a polyester resin, and a polyalkyl(meth)acrylate resin.

3. The current collector of claim 1, wherein a diameter of a cross-section of the fiber-shaped metal material (12) is in a range of 10 to 500 nm, and a length of the cross-section of the fiber-shaped metal material (12) is in a range of 0.5 to 200 *µ*m.

4. The current collector of claim 1, wherein a thickness of the plate-shaped metal material (12) is in a range of 10 to 500 nm, and a width and a length of the plate-shaped metal material (12) are in a range of 0.5 to 200 *µ*m, respectively.

5. The current collector of claim 1, wherein the metal material (12) contains two or more different kinds of metal.

6. The current collector of claim 1, wherein a thickness of the polymer film layer (10) is in a range of 10 to 200 *µ*m.

7. The current collector (2) of claim 1, further comprising a metal layer (20) which is formed on at least one surface of the polymer film layer (10) and has a thickness of 1 *µ*m or less.

8. A method of manufacturing a current collector, the method comprising:
forming a deposition layer (40) by depositing a metal on at least one surface of a base film (30) made of a polymer material;
manufacturing a polymer-metal complex material (50) by pulverizing and mixing the base film (30) having the deposition layer (40) formed thereon and then first-extruding the base film (30); and
forming a polymer film layer (10) in which fiber-shaped or plate-shaped metal materials (12) are oriented in one direction in a polymer matrix (11), by extruding the polymer-metal complex material (50).

9. The method of claim 8, wherein the metal is at least one selected from the group consisting of aluminum, copper, indium, titanium, tin, nickel, iron, tungsten, chrome, cobalt, gold and silver, and
wherein the base film (30) is made of at least one selected from the group consisting of a polyolefin resin, a polyamide resin, a polyester resin, and a polyalkyl(meth)acrylate resin.

10. The method of claim 8, wherein a thickness of the deposition layer (40) is in a range of 50 to 400 nm, and a thickness of the base film (30) is in a range of 20 to 400 *µ*m.

11. The method of claim 8, wherein a volume ratio of the deposition layer (40) to the base film (30) is in a range of 0.5: 99.5 to 10: 90.

12. The method of claim 8, wherein the deposition layer (40) has a structure where two or more different metal layers (20) are laminated.

13. The method of claim 8, wherein the base film (30) having the deposition layer (40) formed thereon is extruded by a twin-screw extruder (200).

14. The method of claim 8, wherein extrusion of a polymer-metal complex material (50) is performed by a single-screw extruder (300).

15. The method of claim 8, further comprising: forming a metal layer (20) on at least one surface of the polymer film layer (10).

## Patentansprüche

1. Stromkollektor (1, 2), umfassend eine komplexe Polymer-Filmschicht (10),
wobei die komplexe Polymer-Filmschicht (10) umfasst:
eine Polymermatrix (11); und
faserförmige oder plattenförmige Metallmaterialien (12), welche in der Polymermatrix (11) dispergiert sind, und
wobei die Metallmaterialien (12) in einer Richtung orientiert sind.

2. Stromkollektor nach Anspruch 1, wobei das Metallmaterial (12) wenigstens eines ist, ausgewählt aus der Gruppe, bestehend aus Aluminium, Kupfer, Indium, Titan, Zinn, Nickel, Eisen, Wolfram, Chrom, Kobalt, Gold und Silber, und
wobei die Polymermatrix (11) aus wenigstens einem hergestellt ist, ausgewählt aus der Gruppe, bestehend aus einem Polyolefin-Harz, einem Polyamid-Harz, einem Polyester-Harz und einem Polyalkyl(meth)acrylat-Harz.

3. Stromkollektor nach Anspruch 1, wobei ein Durchmesser eines Querschnitts des faserförmigen Metallmaterials (12) in einem Bereich von 10 bis 500 nm liegt, und wobei eine Länge des Querschnitts des faserförmigen Metallmaterials (12) in einem Bereich von 0,5 bis 200 µm liegt.

4. Stromkollektor nach Anspruch 1, wobei eine Dicke das plattenförmigen Metallmaterials (12) in einem Bereich von 10 bis 500 nm liegt, und wobei eine Breite und eine Länge des plattenförmigen Metallmaterials (12) jeweils in einem Bereich von 0,5 bis 200 µm liegt.

5. Stromkollektor nach Anspruch 1, wobei das Metallmaterial (12) zwei oder mehr unterschiedliche Arten von Metall enthält.

6. Stromkollektor nach Anspruch 1, wobei eine Dicke der Polymer-Filmschicht (10) in einem Bereich von 10 bis 200 µm liegt.

7. Stromkollektor (2) nach Anspruch 1, ferner umfassend eine Metallschicht (20), welche wenigstens an einer Fläche der Polymer-Filmschicht (10) gebildet ist und eine Dicke von 1 µm oder weniger aufweist.

8. Verfahren eines Herstellens eines Stromkollektors, wobei das Verfahren umfasst:
Bilden einer Ablagerungsschicht (40) durch Ablagern eines Metalls an wenigstens einer Fläche eines Basisfilms (30), welcher aus einem Polymermaterial hergestellt ist;
Herstellen eines Polymer-Metall-Komplexmaterials (50) durch Pulverisieren und Mischen des Basisfilms (30), welcher die darauf gebildete Ablagerungsschicht (40) aufweist, und daraufhin zuerst ein Extrudieren des Basisfilms (30); und
Bilden einer Polymer-Filmschicht (10), in welcher faserförmige oder plattenförmige Metallmaterialien (12) in einer Polymermatrix (11) in einer Richtung orientiert sind, durch Extrudieren des Polymer-Metall-Komplexmaterials (50).

9. Verfahren nach Anspruch 8, wobei das Metall wenigstens eines ist, ausgewählt aus der Gruppe, bestehend aus Aluminium, Kupfer, Indium, Titan, Zinn, Nickel, Eisen, Wolfram, Chrom, Kobalt, Gold und Silber, und
wobei der Basisfilm (30) aus wenigstens einem hergestellt ist, ausgewählt aus der Gruppe, bestehend aus einem Polyolefin-Harz, einem Polyamid-Harz, einem Polyester-Harz und einem Polyalkyl(meth)acrylat-Harz.

10. Verfahren nach Anspruch 8, wobei eine Dicke der Ablagerungsschicht (40) in einem Bereich von 50 bis 400 nm liegt, und wobei eine Dicke des Basisfilms (30) in einem Bereich von 20 bis 400 µm liegt.

11. Verfahren nach Anspruch 8, wobei ein Volumenverhältnis der Ablagerungsschicht (40) zu dem Basisfilm (30) in einem Bereich von 0,5 : 99,5 bis 10 : 90 liegt.

12. Verfahren nach Anspruch 8, wobei die Ablagerungsschicht (40) eine Struktur aufweist, bei welcher zwei oder mehr unterschiedliche Metallschichten (20) laminiert werden.

13. Verfahren nach Anspruch 8, wobei der Basisfilm (30), welcher die darauf gebildete Ablagerungsschicht (40) aufweist, durch einen Doppelschneckenextruder (200) extrudiert wird.

14. Verfahren nach Anspruch 8, wobei ein Extrudieren eines Polymer-Metall-Komplexmaterials (50) durch einen Einschneckenextruder (300) durchgeführt wird.

15. Verfahren nach Anspruch 8, ferner umfassend: Bilden einer Metallschicht (20) an wenigstens einer Fläche der Polymer-Filmschicht (10).

## Revendications

1. Collecteur de courant (1,2) comportant une couche de film polymère complexe (10), dans lequel la couche de film polymère complexe (10) comporte :
une matrice polymère (11) ; et
des matériaux métalliques en forme de fibre ou de plaque (12) qui sont dispersés dans la matrice polymère (11), et
dans lequel les matériaux métalliques (12) sont orientés dans une direction.

2. Collecteur de courant selon la revendication 1, dans lequel le matériau métallique (12) est au moins l'un sélectionné dans le groupe consistant en l'aluminium, le cuivre, l'indium, le titane, l'étain, le nickel, le fer, le tungstène, le chrome, le cobalt, l'or et l'argent, et
dans lequel la matrice polymère (11) est constituée d'au moins l'une sélectionnée dans le groupe consistant en une résine de polyoléfine, une résine de polyamide, une résine de polyester et une résine de polyalkyl(méth)acrylate.

3. Collecteur de courant selon la revendication 1, dans lequel un diamètre d'une section transversale du matériau métallique en forme de fibre (12) est dans une plage de 10 à 500 nm, et une longueur de la section transversale du matériau métallique en forme de fibre (12) est dans une plage de 0,5 à 200 µm.

4. Collecteur de courant selon la revendication 1, dans lequel une épaisseur du matériau métallique en forme de plaque (12) est dans une plage de 10 à 500 nm, et une largeur et une longueur du matériau métallique en forme de plaque (12) sont dans une plage de 0,5 à 200 µm, respectivement.

5. Collecteur de courant selon la revendication 1, dans lequel le matériau métallique (12) contient deux types de métal différents ou plus.

6. Collecteur de courant selon la revendication 1, dans lequel une épaisseur de la couche de film polymère (10) est dans une plage de 10 à 200 µm.

7. Collecteur de courant (2) selon la revendication 1, comprenant en outre une couche métallique (20) qui est formée sur au moins une surface de la couche de film polymère (10) et a une épaisseur de 1 µm ou moins.

8. Procédé de fabrication d'un collecteur de courant, le procédé comprenant :
la formation d'une couche de dépôt (40) par dépôt d'un métal sur au moins une surface d'un film de base (30) constitué d'un matériau polymère ;
la fabrication d'un matériau complexe polymère-métal (50) par pulvérisation et mélange du film de base (30) sur lequel est formée la couche de dépôt (40), puis par extrusion initiale du film de base (30) ; et
la formation d'une couche de film polymère (10) dans laquelle des matériaux métalliques en forme de fibre ou de plaque (12) sont orientés dans une direction dans une matrice polymère (11), par extrusion du matériau complexe polymère-métal (50).

9. Procédé selon la revendication 8, dans lequel le métal est au moins l'un sélectionné dans le groupe consistant en l'aluminium, le cuivre, l'indium, le titane, l'étain, le nickel, le fer, le tungstène, le chrome, le cobalt, l'or et l'argent, et
dans lequel le film de base (30) est constitué d'au moins l'une sélectionnée dans le groupe consistant en une résine de polyoléfine, une résine de polyamide, une résine de polyester et une résine de polyalkyl(méth)acrylate.

10. Procédé selon la revendication 8, dans lequel une épaisseur de la couche de dépôt (40) est dans une plage de 50 à 400 nm, et une épaisseur du film de base (30) est dans une plage de 20 à 400 µm.

11. Procédé selon la revendication 8, dans lequel un rapport volumique de la couche de dépôt (40) au film de base (30) est dans une plage de 0,5: 99,5 à 10: 90.

12. Procédé selon la revendication 8, dans lequel la couche de dépôt (40) présente une structure où deux couches métalliques (20) différentes ou plus sont stratifiées.

13. Procédé selon la revendication 8, dans lequel le film de base (30) sur lequel est formée la couche de dépôt (40) est extrudé par une extrudeuse à double vis (200).

14. Procédé selon la revendication 8, dans lequel l'extrusion d'un matériau complexe polymère-métal (50) est réalisée par une extrudeuse à vis unique (300).

15. Procédé selon la revendication 8, comprenant en outre : la formation d'une couche métallique (20) sur au moins une surface de la couche de film polymère (10).
